# EUROPEAN PATENT APPLICATION

(11) **EP 4 418 782 A1**
(43) Date of publication of application: **21.08.2024**
(21) Application number: 21960689.4
(22) Date of filing: 15.10.2021
(51) Int. Cl.: H04W 72/04

(54) **WIRELESS BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP); TANIGUCHI Masato, Tokyo 100-6150 (JP)
(74) Representative: Hoffmann Eitle
(86) International application number: PCT/JP2021/038302
(87) International publication number: WO 2023/062836

(57) **Abstract**

A radio base station includes a first device including a radio communication unit with a terminal, and a second device connected to the first device. The first device is directly connected to a first device of another radio base station using a specific interface. The first device includes a control unit that controls radio communication with the terminal, and a transmission and reception unit that transmits or receives information on the radio communication via the specific interface.

## Description

### [Technical Field]

The disclosure relates to a radio base station which includes a central device and a distributed device, a radio communication system, and a radio communication method.

### [Background Art]

The 3rd Generation Partnership Project (3GPP) specifies the 5th generation mobile communication system (5G, also called New Radio (NR) or Next Generation (NG)) and is also working on the next generation specifications called Beyond 5G, 5G Evolution, or 6G.

In 3GPP Release 15 and later, it is specified that a radio base station (gNB) can be configured by a central device (gNB-CU) connected to a core network, and one or more distributed devices (gNB-DU) connected to the central device (Non-Patent Literature 1).

Also, in 3GPP Release 15 and later, Carrier Aggregation (Inter-gNB CA) and Dual Connectivity (DC) between multiple gNBs using a high-frequency band (e.g., a frequency band of FR2: 24.25 GHz to 52.6 GHz or a frequency band above 52.6 GHz) are possible.

Further, in 3GPP Release 18, a configuration in which a terminal (User Equipment, UE) utilizes a plurality of radio access technologies (RATs) to achieve three or more connectivity simultaneously (Multi-RAT Multi-Connectivity) is also being considered (Non-Patent Literature 2).

### [Citation List]

### [Non-Patent Literature]

[Non-Patent Literature 1] 3GPP TS 38.473 V15.15.0, 3rd Generation Partnership Project; Technical Specification Group Radio Access Network; NG-RAN; F1 application protocol (FLAP) (Release 15), 3GPP, Oct. 2021
[Non-Patent Literature 2] "Initial Views on Release 18 NR", RP-210293, 3GPP TSG RAN Meeting #91-e, 3GPP, Mar. 2021

### [Summary of Invention]

If Inter-gNB CA or Multi-RAT Multi-Connectivity as described above is introduced, more control information needs to be exchanged between multiple gNBs.

However, in the existing interface configurations (Xn, F1, etc.), there is a possibility that problems such as delay and efficiency occur.

Therefore, the following disclosure has been made in view of such a situation, and it is an object to provide a radio base station, a radio communication system, and a radio communication method capable of quickly and efficiently handling Inter-gNB CA, Multi-RAT Multi-Connectivity or the like.

An aspect of the disclosure is a radio base station (gNB 100) including: a first device (DU 110) including a radio communication unit (radio communication unit 111) with a terminal (UE 200); and a second device (CU 120) connected to the first device, wherein the first device is directly connected to a first device of another radio base station using a specific interface, and the first device includes: a control unit (DU control unit 113) that controls radio communication with the terminal; and a transmission and reception unit (IF connection unit 115) that transmits or receives information on the radio communication via the specific interface.

An aspect of the disclosure is a radio communication system including a terminal and a radio base station, wherein the radio base station includes: a first device including a radio communication unit with the terminal; and a second device connected to the first device, the first device is directly connected to a first device of another radio base station using a specific interface, and the first device includes: a control unit that controls radio communication with the terminal; and a transmission and reception unit that transmits or receives information on the radio communication via the specific interface.

An aspect of the disclosure is a radio communication method by a radio base station, which includes a first device including a radio communication unit with a terminal, and a second device connected to the first device, wherein the first device is directly connected to a first device of another radio base station using a specific interface, including: a step of controlling, by the first device, radio communication with the terminal; and a step of transmitting or receiving, by the first device, information on the radio communication via the specific interface.

### [Brief Description of Drawings]

[FIG. 1] FIG. 1 is an overall schematic configuration diagram of a radio communication system 10.
[FIG. 2] FIG. 2 is a diagram illustrating a configuration example (part 1) of Inter-gNB CA.
[FIG. 3] FIG. 3 is a diagram illustrating a configuration example (part 2) of Inter-gNB CA.
[FIG. 4] FIG. 4 is a diagram illustrating a configuration example (part 1) of Triple Connectivity.
[FIG. 5] FIG. 5 is a diagram illustrating a configuration example (part 2) of Triple Connectivity.
[FIG. 6] FIG. 6 is a diagram illustrating an example of a control plane model for a gNB 100 (gNB-CU, gNB-DU) and a UE 200.
[FIG. 7] FIG. 7 is a functional block configuration diagram of the gNB 100.
[FIG. 8] FIG. 8 is a functional block configuration diagram of the UE 200.
[FIG. 9] FIG. 9 is a diagram illustrating an example of a split of user plane data in Inter-gNB CA (case 1).
[FIG. 10] FIG. 10 is a diagram illustrating an example of the split of the user plane data in Inter-gNB CA (case 2).
[FIG. 11] FIG. 11 is a diagram illustrating an example of the split of the user plane data in Inter-gNB CA (case 3).
[FIG. 12] FIG. 12 is a diagram illustrating an example of the split of the user plane data in Inter-gNB CA (case 4).
[FIG. 13] FIG. 13 is a diagram illustrating a procedure example 1 of scheduling coordination.
[FIG. 14] FIG. 14 is a diagram illustrating a procedure example 2 of the scheduling coordination.
[FIG. 15] FIG. 15 is a diagram illustrating a procedure example 3 of the scheduling coordination.
[FIG. 16] FIG. 16 is a diagram illustrating a procedure example 4 of the scheduling coordination.
[FIG. 17] FIG. 17 is a diagram illustrating an example of a hardware configuration of the gNB 100 and the UE 200.
[FIG. 18] FIG. 18 is a diagram illustrating an example of a configuration of a vehicle 2001.

### [Modes for Carrying out the Invention]

Exemplary embodiments will be described below with reference to the accompanying drawings. Note that the same functions or structures will be denoted by the same or similar reference numerals, and their descriptions are omitted accordingly.

### (1) Overall schematic configuration of the radio communication system

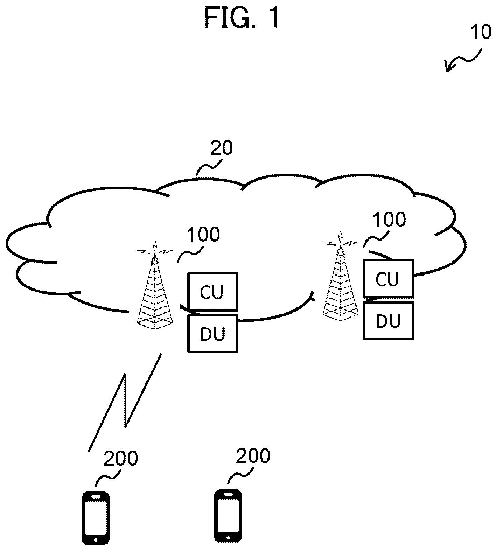

FIG. 1 is an overall schematic configuration diagram of the radio communication system 10 according to an embodiment. The radio communication system 10 is a radio communication system according to 5G New Radio (NR), and includes a Next Generation-Radio Access Network 20 (hereinafter referred to as NG-RAN 20) and a terminal 200 (User Equipment 200, hereinafter referred to as UE 200).

The radio communication system 10 may be a radio communication system according to a system called Beyond 5G, 5G Evolution or 6G, or may include a radio communication system according to a system called Long Term Evolution (LTE) or 4G.

The NG-RAN 20 includes a radio base station 100 (hereinafter referred to as gNB 100). Note that the specific configuration of the radio communication system 10 including the number of gNBs (which may be replaced with eNBs etc.) and the number of UEs is not limited to the example illustrated in FIG. 1.

The NG-RAN 20 actually includes a plurality of NG-RAN Nodes, specifically gNBs (or ng-eNBs), and is connected to a core network (5GC, not illustrated) according to 5G. The NG-RAN20 is connected to an Access and Mobility Management Function (AMF), which provides a management function of access and mobility for the UE200, a Session Management Function (SMF), and the like that are included in a 5G system architecture. Note that the NG-RAN20 and the 5GC may be referred to simply as "network".

The gNB 100 is a radio base station according to NR, and performs radio communication with the UE 200 according to NR. Note that the gNB 100 may be configured by a gNB-CU (Central Unit) and a gNB-DU (Distributed Unit), and the DU may be separated from the CU and installed in a different geographical location from the CU.

The gNB-DU includes a radio communication unit which communicates with the UE 200. The gNB-DU may be referred to as a first device, a distribution device, or the like. The gNB-CU is connected to the gNB-DU. Specifically, the gNB-CU is connected to one or more gNB-DUs via one or more F1 interfaces each of which is an interface specified in 3GPP. The gNB-CU may be referred to as a second device, a central device, or the like.

The gNB 100 and the UE 200 can support Massive MIMO, which generates a more directional beam by controlling radio signals to be transmitted from multiple antenna elements, Carrier Aggregation (CA), which uses multiple component carriers (CCs) bundled together, and Dual Connectivity (DC), in which communicates between the UE and respective multiple NG-RAN Nodes are simultaneously performed. Note that the CA may include Inter-gNB CA, which is CA between different gNBs 100.

The gNB 100 and the UE 200 perform radio communication via a radio bearer, specifically, a Signalling Radio Bearer (SRB) or a DRB Data Radio Bearer (DRB).

In this embodiment, Multi-Radio Dual Connectivity (MR-DC), specifically E-UTRA-NR Dual Connectivity (EN-DC) in which any gNB 100 is configured as a master node (MN) and another gNB 100 is configured as a secondary node (SN), can be performed.

The any gNB 100 may be included in a Master Cell Group (MCG) and the other gNB 100 may be included in a Secondary Cell Group (SCG). The gNB 100 (gNB-CU, gNB-DU) may be referred to as a radio base station or a network device.

A type of DC may be Multi-RAT Dual Connectivity (MR-DC), which uses multiple radio access technologies, or NR-NR Dual Connectivity (NR-DC), which uses only NR. The MR-DC may also be E-UTRA-NR Dual Connectivity (EN-DC), in which an eNB is configured as the master node (MN) and a gNB is configured as the secondary node (SN), or NR-E-UTRA Dual Connectivity (NE-DC), which has reverse configurations.

In the DC, the MCG and the SCG may be configured. A primary cell (PCell) may be included in the MCG, and a secondary cell (SCell) may be included in the SCG.

A primary and secondary cell (PSCell) may be also included in the SCell. The PSCell is a type of the SCell, but may be interpreted as a special SCell with a function equivalent to a function of the PCell. Similar to the PCell, in the PSCell, a PUCCH (Physical Uplink Control Channel, uplink control channel) transmission, a contention-based random access procedure (CBRA), a Radio Link Monitoring (downlink radio quality monitoring) function may be performed

The UE 200 can support Dual Connectivity in which the UE 200 simultaneously connects to two gNBs 100 (which can be read as gNB-DUs), or Triple Connectivity in which the UE 200 simultaneously connects to three gNBs 100 (gNB-DUs). Since the UE 200 supports the MR-DC, the UE 200 can also support Multi-RAT Multi-Connectivity, which uses multiple radio access technologies (RATs) to achieve three or more connectivity simultaneously.

### (2) Configuration examples of Inter-gNB CA and Triple Connectivity

Next, configuration examples of Inter-gNB CA and Triple Connectivity by the gNB 100 (radio base station), which is configured by the gNB-DU and the gNB-CU, and the UE 200 will be described.

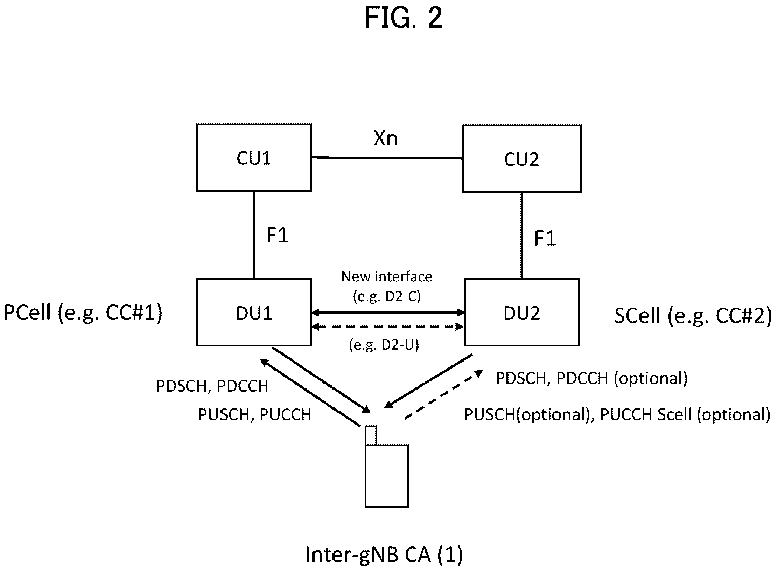

FIG. 2 illustrates a configuration example (part 1) of Inter-gNB CA. As illustrated in FIG. 2, a CU1 and a CU2 may be connected by an Xn interface, and the CU 1 and a DU1 and the CU2 and a DU2 may be connected by F1 interfaces, respectively.

The DU1 and the DU2 may be connected by a new interface (here called D2 (tentative name)). The D2 may have a control plane (D2-C) and a user plane (D2-U) as well as other interfaces.

The DU1 may form a PCell (e.g., CC #1 is used) and the DU2 may form an SCell (e.g., CC #2 is used) (the same applies hereinafter). The DU1 may be referred to as a Master DU (M-DU) and the DU2 may be referred to as a Secondary DU (S-DU).

The UE 200 performs radio communication with the DU1 and the DU2, and can configure uplink channels (PDSCH (Physical Downlink Shared Channel) and PDCCH (Physical Downlink Control Channel)) and downlink channels (PUSCH (Physical Uplink Shared Channel) and PUCCH (Physical Uplink Control Channel)) with each of the DU1 and the DU2. These channels to be configured with the SCell (DU2) may be omitted.

In this embodiment, various types of signaling may be performed through the D2 interface to support Inter-gNB CA. The signaling may be performed at a Physical Layer (PHY), a Medium Access Control Layer (MAC) or a Radio Link Control Layer (RLC), or at a higher layer such as a Radio Resource Control Layer (RRC).

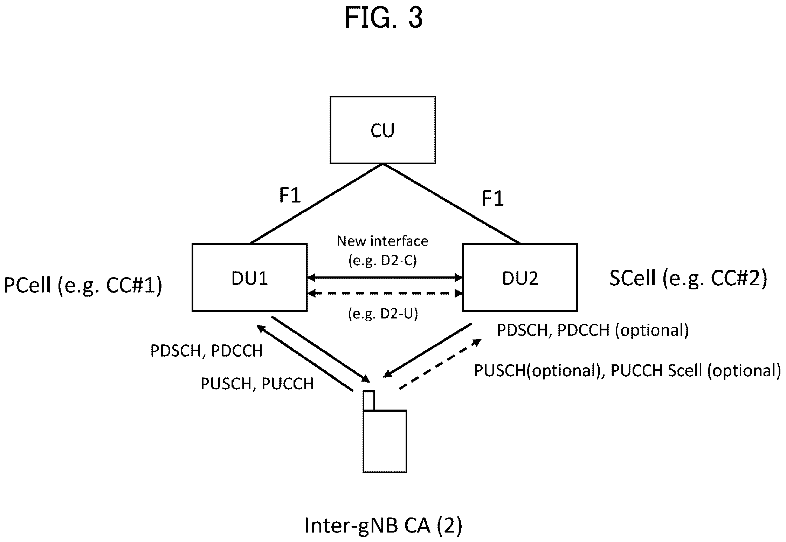

FIG. 3 illustrates a configuration example (part 2) of Inter-gNB CA. As illustrated in FIG. 3, the DU1 and the DU2 may be connected to the same CU. In other words, multiple DUs may be connected to a single CU. In this configuration example, the DU1 and the DU2 may be connected by the D2 interface.

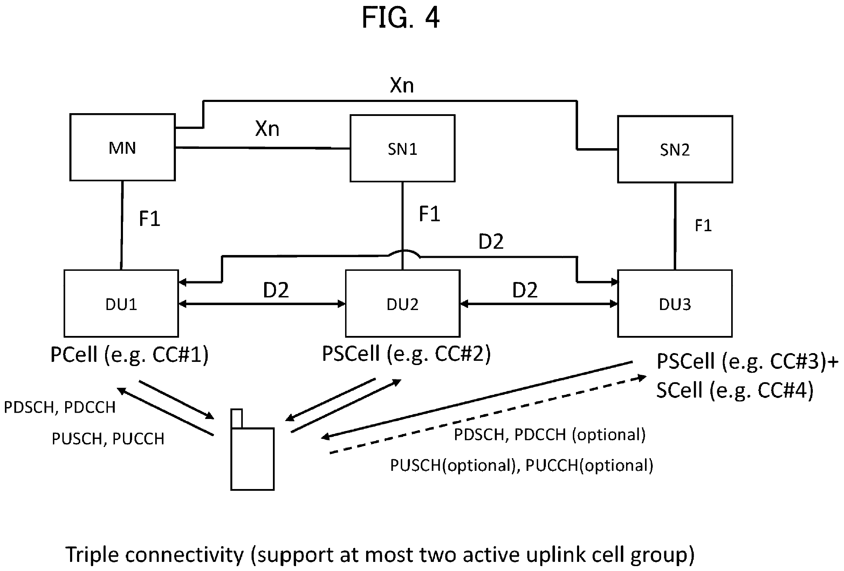

FIG. 4 illustrates a configuration example (part 1) of Triple Connectivity. As illustrated in FIG. 4, an MN may be connected to an SN1 and an SN2 by Xn interfaces.

The MN may be connected to a DU1 by an F1 interface. The SN1 and the SN2 may also be respectively connected to a DU2 and a DU3 by F1 interfaces. The DU1 and the DU2, the DU1 and the DU3, and the DU2 and the DU3 may be connected by D2 interfaces, respectively.

The UE 200 may perform radio communication with the DU1, the DU2, and the DU3 to configure uplink channels and downlink channels. In this configuration example, the DU2 may form a PSCell (e.g., CC #2 is used) and the DU3 may form a PSCell and an SCell (e.g., CCs #3, 4 are used).

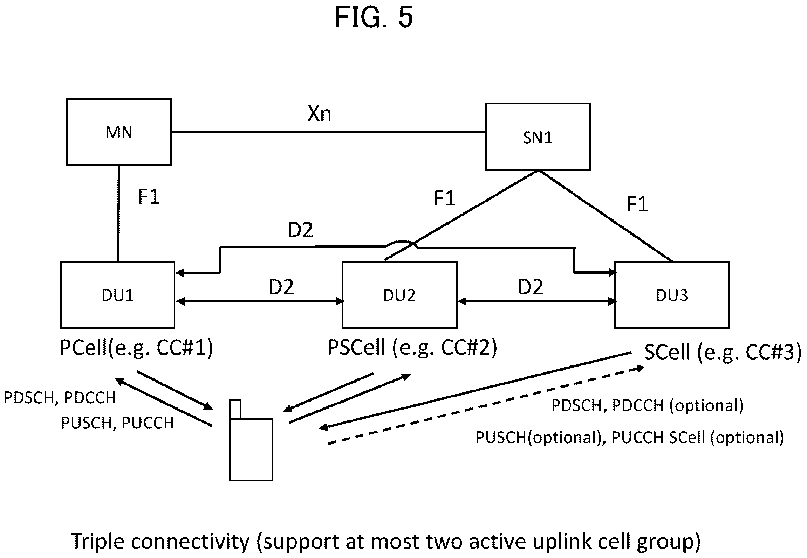

FIG. 5 illustrates a configuration example (part 2) of Triple Connectivity. As illustrated in FIG. 5, the MN may be connected to the SN1 by an Xn interface.

The MN may be connected to the DU1 by the F1 interface. The SN1 may be connected to the DU2 and the DU3 by the F1 interfaces. In other words, multiple DUs may be connected to a single SN. The DU1 and the DU2, the DU1 and the DU3, and the DU2 and the DU3 may be connected by the D2 interfaces, respectively. In this configuration example, the DU2 may form a PSCell (e.g., CC #2 is used) and the DU3 may form an SCell (e.g., CC #3 is used).

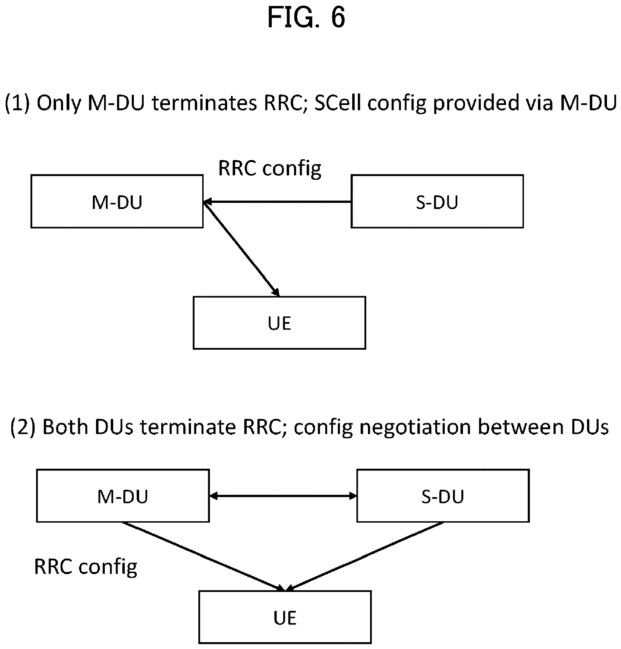

FIG. 6 illustrates an example of a control plane model for the gNB 100 (gNB-CU, gNB-DU) and the UE 200. As illustrated in FIG. 6, only the M-DU may terminate an RRC layer, and configuration information of an SCell may be provided via the M-DU ((1) in the figure).

Alternatively, the M-DU and the S-DU may terminate RRC layers, and negotiation of configuration may be performed between the M-DU and the S-DU ((2) in the figure). In view of ease of implementation and other factors, the form (1) is considered preferable.

### (3) Functional block configuration of radio communication system

Next, a functional block configuration of the radio communication system 10 will be described. Specifically, functional block configurations of the gNB 100 and the UE 200 will be described.

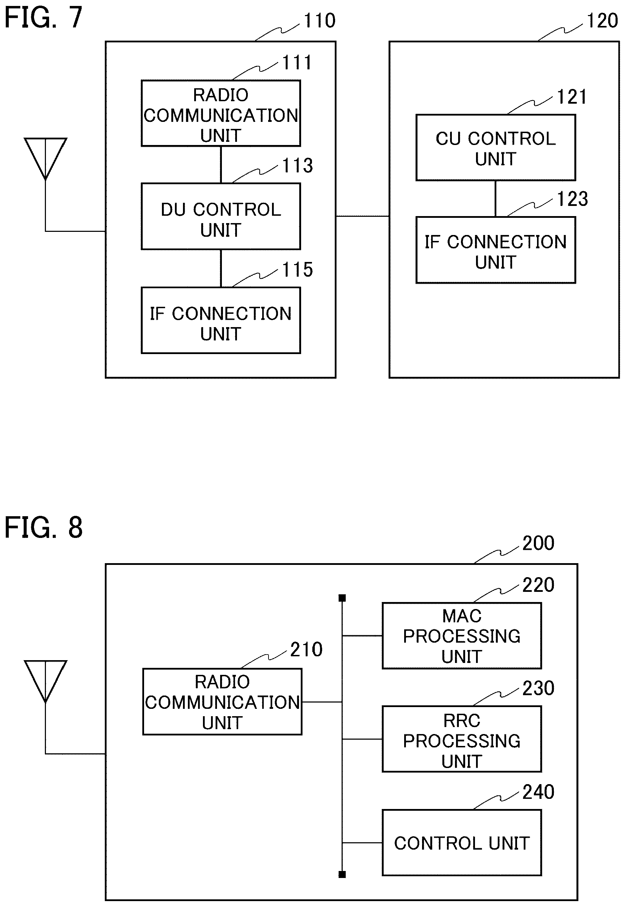

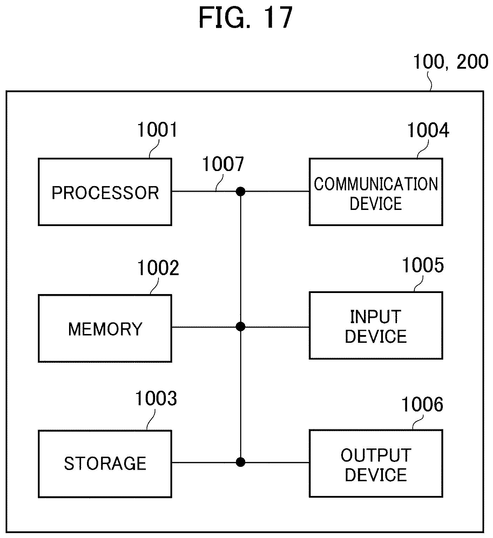

FIG. 7 is a functional block configuration diagram of the gNB 100. FIG. 8 is a functional block configuration diagram of the UE 200. Note that in FIG. 7 and FIG. 8, only main functional blocks relevant to the description of the embodiment are illustrated, and the gNB 100 and the UE 200 have other functional blocks (e.g., power supply unit, etc.). Also, FIG. 7 and FIG. 8 illustrates the functional block configurations of the gNB 100 and UE 200, and a hardware configuration thereof is provided in FIG. 17.

### (3.1) gNB 100

As illustrated in FIG. 7, the gNB 100 may be configured by a DU 110 and a CU 120. Note that the number of DUs 110 and CUs 120 configuring gNB 100 is not limited.

The DU 110 includes a radio communication unit 111, a DU control unit 113, and an IF connection unit 115. The CU 120 includes a CU control unit 121 and an IF connection unit 123. The DU 110 may function as the M-DU or the S-DU.

The radio communication unit 111 transmits a downlink signal (DL signal) according to NR. The DU 110 also receives an uplink signal (UL signal) according to NR.

The DU control unit 113 can control the radio communication unit 111 and the IF connection unit 115, and control radio communication with the UE 200. In this embodiment, the DU control unit 113 may constitute a control unit.

Specifically, the DU control unit 113 can perform various signaling and processing in the PHY, MAC, and RLC layers with the UE 200. The DU control unit 113 can also perform signaling and processing in these layers with a DU of another gNB 100 (another radio base station).

The IF connection unit 115 provides functions required for connection to the CU 120 via the F1 interface, and for connection to another DU via the D2 interface (specific interface). As described above, the DU 110 can be directly connected to another gNB 100 (gNB-DU) using the D2 interface.

The IF connection unit 115 can transmit or receive information on radio communication with the UE 200 via the D2 interface. In this embodiment, the IF connection unit 115 may constitute a transmission and reception unit. Specifically, the IF connection unit 115 can transmit or receive information indicating a status of a radio link with the UE 200 in an SCell (which may include a PSCell, the same applies hereinafter). The information indicating the status of the radio link may be interpreted as information on an uplink control channel, an Uplink Medium Access Control Layer Control Element (MAC-CE), and a Radio Link Control Layer (RLC) with the UE 200 in the SCell.

For example, the information indicating the status of the radio link includes an acknowledgement (ACK) / a negative acknowledgement (NACK) of HARQ (Hybrid Automatic repeat request) in an SCell (may be read as CC), Channel State Information (CSI), Scheduling Request (SR), Buffer State Report (BSR), and the like. More specific examples of such information will be described below.

The IF connection unit 115 can transmit or receive at least any of information on a downlink control channel, the Medium Access Control Layer Control Element (MAC-CE) and the Radio Link Control Layer (RLC) with the UE 200 in the SCell.

Specifically, the IF connection unit 115 can transmit or receive information on a PDCCH of the SCell (e.g., Carrier indicator, BWP (Bandwidth part) indicator, etc.), information on the MAC-CE (e.g., TA (timing advance), DRX (Discontinuous Reception) command, etc.), and an acknowledgement (ACK) / a negative acknowledgement (NACK) in an RLC AM (Acknowledged Mode). More specific examples of such information will be described below.

The IF connection unit 115 can also transmit or receive scheduling information to be used to decide a scheduling priority of the UE 200. Specifically, the IF connection unit 115 can transmit or receive information which serves as an indicator for determining a scheduling priority of an uplink (UL) among multiple UEs 200.

For example, an average data rate and/or an achievable rate (achievable data rate) may be included as this information. Note that a scheduling method is not limited, but for example, PF (Proportional Fair) scheduling may be applied thereto.

The CU control unit 121 of the CU 120 can perform various signaling and processing in a higher layer with the UE 200, specifically, in the Packet Data Convergence Protocol Layer (PDCP) and the Radio Resource Control Layer (RRC). The CU control unit 121 can also control the IF connection unit 123.

The IF connection unit 123 provides functions required for connection to the DU 110 via the F1 interface, and for connection to various nodes including the NG-RAN 20 and the core network (5GC). As described above, the IF connection unit 123 may be connected to multiple DUs 110 via the F1 interfaces, as described above.

### (3.2 UE 200)

As illustrated in FIG. 8, the UE 200 includes a radio communication unit 210, a MAC processing unit 220, an RRC processing unit 230, and a control unit 240.

The radio communication unit 210 transmits an uplink signal (UL signal) according to NR. The radio communication unit 210 also receives an uplink signal (DL signal) according to NR.

The MAC processing unit 220 performs various processes in the Medium Access Control Layer (MAC). Specifically, the MAC processing unit 220 can transmit and receive the Medium Access Control Layer Control Element (MAC-CE). The MAC processing unit 220 may support the MAC-CE as specified in 3GPP TS38.321 and the like.

The RRC processing unit 230 performs various processes in the Radio Resource Control Layer (RRC). Specifically, the RRC processing unit 230 can transmit and receive a message of the Radio Resource Control Layer to and from the gNB 100 (CU 120).

The UE 200 may also perform processing for layers other than the MAC and the RRC. For example, Layer 1 may be interpreted to include a lower layer such as the Physical Layer. Layer 3 is a layer higher than the Layer 1. At least any of the Radio Link Control Layer (RLC), the Packet Data Convergence Protocol Layer (PDCP), and the Radio Resource Control Layer (RRC) may be included in the higher layer, and the Medium Access Control Layer (MAC) may be positioned between the lower layer and the higher layer.

A channel includes a control channel and a data channel. The control channel includes PDCCH (Physical Downlink Control Channel), PUCCH (Physical Uplink Control Channel), RACH (Random Access Channel) (which may be replaced with Downlink Control Information (DCI) including Random Access Radio Network Temporary Identifier (RA-RNTI)), Physical Broadcast Channel (PBCH), and the like.

The data channel includes PDSCH (Physical Downlink Shared Channel), PUSCH (Physical Uplink Shared Channel) and the like. Data may mean one to be transmitted over a data channel.

The control unit 240 controls respective functional blocks constituting the UE 200. Specifically, in this embodiment, the control unit 240 can perform control over Inter-gNB CA and Triple Connectivity (which may include Multi-RAT Multi-Connectivity).

Specifically, the control unit 240 can configure a radio link (radio bearer) with each of the multiple gNBs 100 via the uplink channel and the downlink channel, and perform signaling and processing in each layer.

### (4) Operation of radio communication system

Next, an operation of the radio communication system 10 will be described. Specifically, the operation related to Inter-gNB CA and Triple Connectivity between gNBs 100 in which the D2 interface (tentative name) between DUs has been configured, and the UE 200, will be described.

### (4.1) Assumption

To achieve higher throughput in the UE 200, Carrier Aggregation (CA) or Dual Connectivity (or Triple Connectivity) need to be applied in the high-frequency band of FR2 (24.25 GHz to 52.6 GHz) or above 52.6 GHz.

In the existing CA, when a new frequency band is added in the gNB (or eNB), there are operational disadvantages such as complexity of reaccommodating frequency bands and need of reserving capacity to support the frequency band.

On the other hand, Inter-gNB CA simplifies operation and is more convenient because a new other gNB need only be added when adding a new frequency band.

Also, in a case of Dual Connectivity (and Triple Connectivity), there is a problem in which a high UL transmit power is required in the UE 200. Specifically, when Dual Connectivity is applied, the UL transmit power is distributed between an MCG leg and a SCG leg, which brings a situation where UL throughput cannot be increased. In a case of Triple Connectivity, the problem can be even more severe because the UL transmit power is distributed among three legs.

Note that in a case of Inter-gNB CA, this problem can be avoided because the UL transmit power is not distributed among multiple legs.

### (4.2) Split of user plane data in Inter-gNB CA

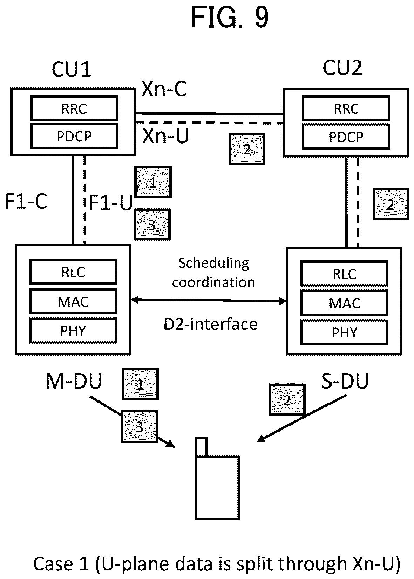

Next, examples of split of user plane data in Inter-gNB CA will be described. FIG. 9 illustrates an example of a split of user plane data in Inter-gNB CA (case 1). In FIG. 9, a shaded square box represents a packet, and a number in the box indicates a packet number (order) (the same applies hereinafter).

In FIG. 9, the CU1 is connected to the M-DU, and the CU2 is connected to the S-DU. User plane (U-plane) data (packets 1 to 3) may be split from the CU1 via an Xn-U interface. In the example of FIG. 9, the packets 1 and 3 are transmitted via the M-DU, and the packet 2 is transmitted via the S-DU.

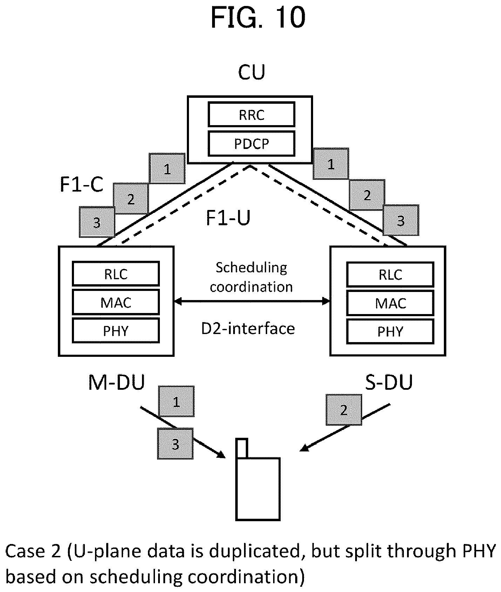

FIG. 10 illustrates an example of the split of the user plane data in Inter-gNB CA (case 2). In FIG. 10, one CU is connected to the M-DU and the S-DU. The U-plane data (packets 1 to 3) may be replicated in the CU, and split and transmitted via PHYs in the M-DU and the S-DU. In the example of FIG. 10, the packets 1 and 3 are transmitted via the M-DU, and the packet 2 is transmitted via the S-DU.

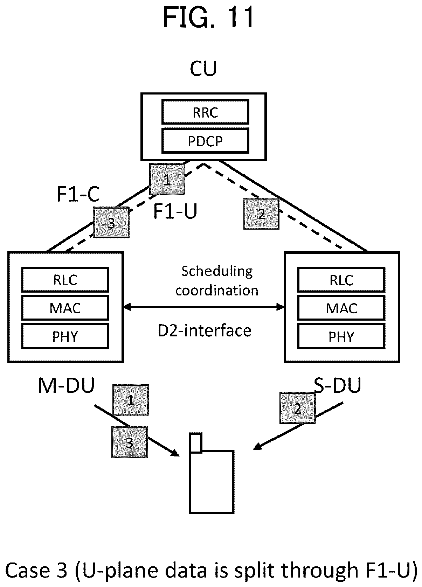

FIG. 11 illustrates an example of the split of the user plane data in Inter-gNB CA (case 3). In FIG. 11, one CU is connected to the M-DU and the S-DU. The U-plane data (packets 1 to 3) may be split from the CU. In the example of FIG. 11, the packets 1 and 3 are transmitted via the M-DU, and the packet 2 is transmitted via the S-DU.

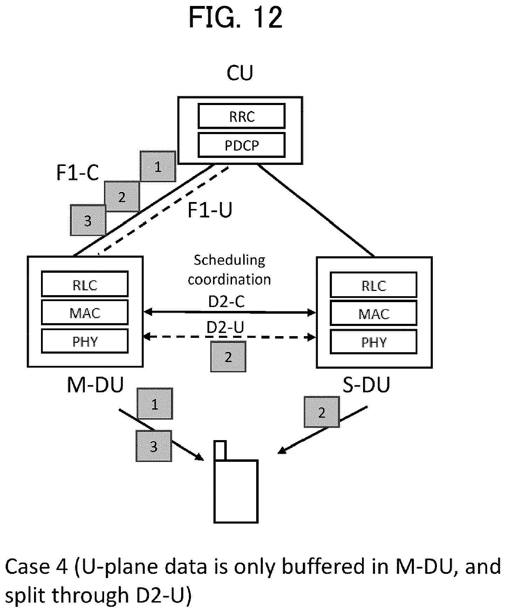

FIG. 12 illustrates an example of the split of the user plane data in Inter-gNB CA (case 4). In FIG. 12, one CU is connected to the M-DU and the S-DU. The U-plane data (packets 1 to 3) is not split in the CU, but split in the M-DU.

Specifically, the M-DU forwards the packet 2 to the S-DU via the D2 interface. The S-DU transmits the forwarded packet 2 to the UE. In the example of FIG. 12, the packets 1 and 3 are transmitted via the M-DU, and the packet 2 is transmitted via the S-DU.

### (4.3) Examples of operation

Examples of operation related to the Inter-gNB CA will be described as follows. Specifically, examples of operation related to control information to be transmitted and received via the D2 interface and operation related to determination of the scheduling priority of the UE 200, will be described.

### (4.3.1) Example 1 of operation

The M-DU and the S-DU may transmit or receive the following information via the D2 interface described above.

Specifically, one DU which forms a PCell or a PSCell (DU who holds PCell or PSCell) may transmit to another DU which uses a secondary CC (SCC) (which may be read as forming a SCell) (DU who holds SCC) via the D2 interface, at least any of the following information (or it may be transmitted a reverse direction, or it may be transmitted via the Xn interface or the F1 interface. The same applies hereinafter).

- HARQ-ACK/NACK in SCell (e.g. CC#2)
- CSI report in SCell (e.g. CC#2)
- SR (Scheduling Request), BSR (Buffer Status Report)
- PHR (Power Headroom Report ) MAC CE, BFR (Beam Failure Report) MAC CE, LBT (Listen-Before-Talk) failure MAC CE, Multiple Entry Configured Grant Confirmation MAC CE, Guard Symbols MAC CE
- RLC AM ACK/NACK, RLC segment size control info

In addition, another DU which uses SCC (DU who holds SCC) may transmit to one DU which forms a PCell or a PSCell (DU who holds PCell or PSCell) via the D2 interface, at least any of the following information.

· PDCCH related information of SCell (e.g. CC#2)
   · Carrier indicator
   · BWP indicator
   · Frequency domain resource assignment (FDRA)
   · time domain resource assignment (TDRA)
   · frequency hopping flag
   · MCS (Modulation and Coding Scheme)
   · new data indicator
   · redundancy version
   · HARQ process number
   · TPC (Transmit Power Control) command for scheduled PUSCH
   · UL/SUL (Supplementary Uplink) indicator
   · CSI request
· MAC-CE related information
   · TA (timing advance)
   · DRX command
   · SCell (de)activation
   · PDCP duplication (de)activation
   · Duplication RLC Activation/Deactivation MAC CE
   · SP CSI-RS/CSI-IM Resource Set Activation/Deactivation
   · Aperiodic CSI Trigger State Subselection MAC CE
   · (Enhanced) TCI States Activation/Deactivation for UE-specific PDSCH MAC CE
   · TCI State Indication for UE-specific PDCCH MAC CE
   · SP (Semi-Persistent) CSI reporting on PUCCH Activation/Deactivation MAC CE
   · SP SRS (Sounding Reference Signal) Activation/Deactivation MAC CE
   · (Enhanced) PUCCH spatial relation Activation/Deactivation MAC CE
   · SP ZP (Zero Power) CSI-RS Resource Set Activation/Deactivation MAC CE
   · Timing Delta MAC CE
   · Enhanced SP/AP SRS Spatial Relation Indication MAC CE
   · SRS Pathloss Reference RS Update MAC CE
   · PUSCH Pathloss Reference RS Update MAC CE
   · Serving Cell Set based SRS Spatial Relation Indication MAC CE
   · SP Positioning SRS Activation/Deactivation MAC CE
   · Guard Symbols MAC CE
· RLC AM ACK/NACK, RLC segment size control info

In addition, an addition, modification, or release procedure of a new gNB (gNB-CU, gNB-DU) (which may be expressed by any of addition/modification/change/release) may be specified to support Inter-gNB CA. Alternatively, an addition, modification, or release procedure of the existing SN (SN addition/modification/change/release procedure) may be reused such that an indication of whether or not Inter-gNB CA is present is included therein.

This makes it easy to realize operations such as switching to Inter-gNB CA when packets are accumulated because a desired throughput cannot be achieved due to insufficient UL transmit power, and switching to DC when highly reliable communication is required.

In a case of Triple Connectivity, the MN or the SN may determine an SN (S-DU) that forms a PSCell. In this case, the MN may instruct an SN that forms a PSCell at a timing of SN addition/modification, or the SN may request the MN to determine an SN that forms a PSCell at a timing of switching between Inter-gNB CA and DC. Also, the Inter-gNB CA and DC may be switched in the SN/gNB modification procedure depending on radio quality, a load condition of a gNB, or required reliability.

In addition, a message regarding the addition, modification, or release procedure of DU (DU addition/DU modification/DU change/DU release) using the D2 interface may be specified, and the addition or the like of DU may be performed using this message.

### (4.3.2) Example 2 of operation

In a case where Inter-gNB CA is supported, scheduling of UL resources for a UE performing Inter-gNB CA and another UE using the same cell, are required.

In this case, PF (Proportional Fair) may be applied as a scheduling method, for example. Also, information that serves as an indicator to decide a scheduling priority, e.g., average data rate and achievable data rate, may be reported from the S-DU to the M-DU or from the M-DU to the S-DU. In other words, information related to a scheduler in a gNB may be shared between the M-DU and the S-DU.

The M-DU and the S-DU may inform and/or negotiate scheduler parameters such as a parameter that decide scheduling fairness, a scheduling priority between the M-DU and S-DU, and the like.

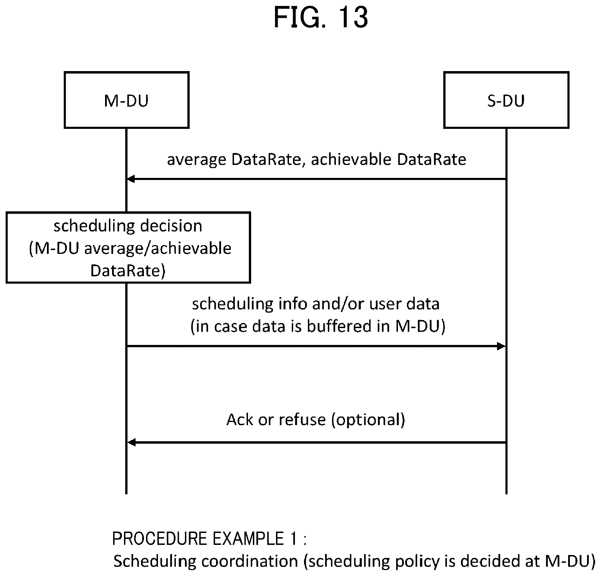

FIG. 13 illustrates a procedure example 1 of scheduling coordination. In the procedure example 1, the M-DU decides a scheduling policy. As illustrated in FIG. 13, the S-DU notifies the M-DU of an average data rate and an achievable data rate (either or both of these is acceptable).

The M-DU may decide scheduling of the UE and transmit scheduling information and/or user data to the S-DU. The S-DU may confirm this scheduling information, and return an acknowledgement (ACK) or refuse (refuse) (optional).

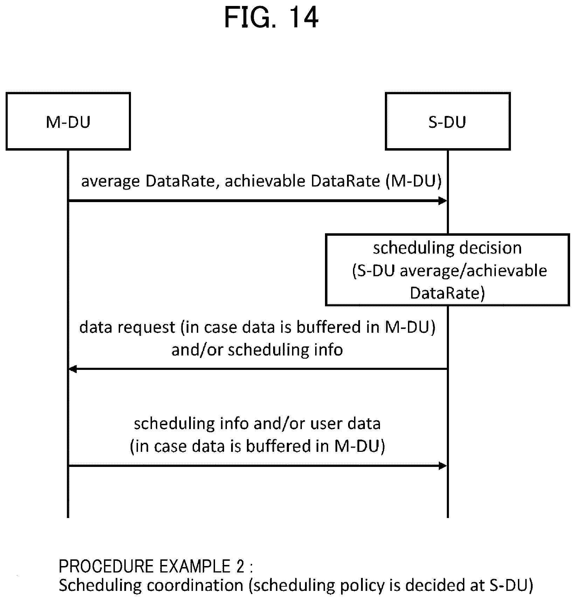

FIG. 14 illustrates a procedure example 2 of the scheduling coordination. In the procedure example 2, the S-DU decides a scheduling policy. As illustrated in FIG. 14, the M-DU notifies the S-DU of an average data rate and an achievable data rate (either or both of these is acceptable).

The S-DU may decide scheduling of the UE and transmit data request and/or scheduling information to the M-DU. Also, the M-DU may transmit the scheduling information and/or the user data to the S-DU.

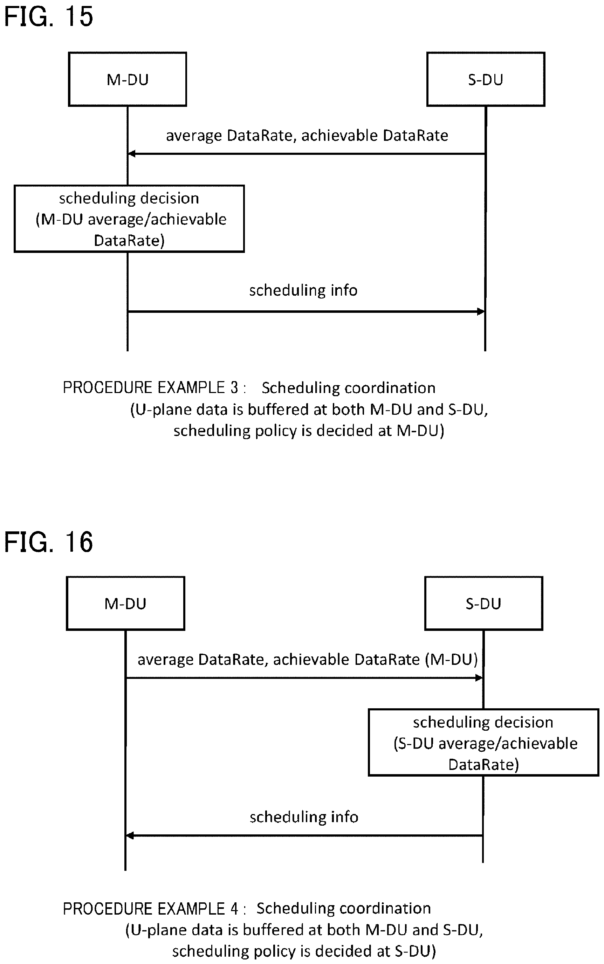

FIG. 15 illustrates a procedure example 3 of the scheduling coordination. In the procedure example 3, user data (U-plane data) is buffered in both of the M-DU and the S-DU, and the M-DU decides a scheduling policy. In comparison with the procedure example 1, in the procedure example 3, the M-DU may decide the scheduling of the UE and transmit only the scheduling information to the S-DU.

FIG. 16 illustrates a procedure example 4 of the scheduling coordination. In the procedure example 4, user data (U-plane data) is buffered at both of the M-DU and the S-DU, and the S-DU decides a scheduling policy. In comparison with the procedure example 2, in the procedure example 4, the S-DU may decide the scheduling of the UE and transmit only the scheduling information to the M-DU.

### (5) Action and Effect

According to the embodiment described above, the following effects can be obtained. Specifically, in this embodiment, the DUs are directly connected via the D2 interface, which enables quick and efficient processing via the D2 interface.

More specifically, by an introduction of the D2 interface, Inter-gNB CA or Triple Connectivity (Multi-RAT Multi-Connectivity may be included) can be supported, which allows efficient exchange of various control information via the D2 interface. This is expected to facilitate smooth introduction of Inter-gNB CA and Triple Connectivity.

In this embodiment, information indicating a status of a radio link with the UE 200 in the SCell (which may include a PSCell, the same applies hereinafter), and information on a downlink control channel, the Medium Access Control Layer Control Element (MAC-CE), and the Radio Link Control Layer (RLC) with the UE 200 in the SCell, can be exchanged via the D2 interface. This allows Inter-gNB CA, Multi-RAT Multi-Connectivity, or the like to be handled quickly and efficiently.

### (6) Other embodiments

Although the embodiments have been described above, it is obvious to those skilled in the art that the embodiments are not limited to these descriptions but can be modified and improved in various ways.

For example, although the name D2 interface was used in the above-described embodiments, this name is a tentative name and may be called by another name.

The gNB-DU may be referred to as an extension device, a remote device, etc., in addition to the distributed device, and the gNB-CU may be referred to as an aggregator, a main device, etc., in addition to the central device.

In the above description, configure, activate, update, indicate, enable, specify, and select may be interchanged. Similarly, link, associate, correspond, and map may be interchanged, and allocate, assign, monitor, and map may be interchanged.

In addition, specific, dedicated, UE-specific, and UE-dedicated may be interchanged. Similarly, common, shared, group-common, UE-common, and UE-shared may be interchanged.

Further, the block configuration diagram (FIG. 7 and FIG. 8) used in the description of the above-described embodiments illustrates blocks of functional units. Those functional blocks (structural components) can be realized by a desired combination of at least one of hardware and software. A means for realizing each functional block is not particularly limited. That is, each functional block may be realized by one device combined physically or logically. Alternatively, two or more devices separated physically or logically may be directly or indirectly connected (for example, using wired, wireless, or the like) to each other, and each functional block may be realized by these plural devices. The functional blocks may be realized by combining software with the one device or the plural devices described above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that functions to transmit is called a transmitting unit or a transmitter. As described above, the means for realizing is not particularly limited.

Furthermore, the gNB 100 and the UE 200 (apparatus) described above may function as computers for processing the radio communication method of the present disclosure. FIG. 17 is a diagram illustrating an example of a hardware configuration of the apparatus. As illustrated in FIG. 17, the apparatus may be configured as a computer device including a processor 1001, a memory 1002, a storage 1003, a communication device 1004, an input device 1005, an output device 1006, a bus 1007, and the like.

Note that, in the following description, the term "device" can be replaced with a circuit, a device, a unit, or the like. A hardware configuration of the apparatus can be constituted by including one or more of each of devices illustrated in the diagram, or can be constituted by without including a part of the devices.

Each functional block of the apparatus (see FIG. 7 and FIG. 8) is implemented by any of hardware elements of the computer device or a combination of the hardware elements.

Moreover, the processor 1001 performs computing by loading a predetermined software (computer program) on hardware such as the processor 1001 and the memory 1002, and realizes each function in the apparatus by controlling communication via the communication device 1004, and controlling at least one of reading and writing of data on the memory 1002 and the storage 1003.

The processor 1001, for example, operates an operating system to control the entire computer. The processor 1001 may be configured with a central processing unit (CPU), including an interface to a peripheral device, a controller, an arithmetic device, a register, and the like.

Moreover, the processor 1001 reads a computer program (program code), a software module, data, and the like from at least one of the storage 1003 and the communication device 1004 into the memory 1002, and executes various processes according to them. As the computer program, a computer program that causes the computer to execute at least a part of the operation in the above-described embodiments, is used. Alternatively, various processes described above may be executed by one processor 1001 or may be executed simultaneously or sequentially by two or more processors 1001. The processor 1001 may be implemented by using one or more chips. Note that the computer program may be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, a cache, a main memory (main storage device), or the like. The memory 1002 can store a program (program code), a software module, or the like capable of executing a method according to the embodiment of the present disclosure.

The storage 1003 is a computer readable recording medium. For example, the storage 1003 may include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 may be called an auxiliary storage device. The recording medium described above may be, for example, a database including at least one of the memory 1002 and the storage 1003, a server, or other appropriate medium.

The communication device 1004 is hardware (transmission and reception device) capable of performing communication between computers via at least one of a wired network and a wireless network. The communication device 1004 is also called, for example, a network device, a network controller, a network card, a communication module, or the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each of devices such as the processor 1001 and the memory 1002, is connected by a bus 1007 for communicating information. The bus 1007 may be configured using a single bus or a different bus for each device.

Further, the apparatus may be configured to include hardware such as a microprocessor, a digital signal processor (Digital Signal Processor: DSP), Application Specific Integrated Circuit (ASIC), Programmable Logic Device (PLD), Field Programmable Gate Array (FPGA), and the like. Some or all of the functional blocks may be realized by the hardware. For example, the processor 1001 may be implemented by using at least one of these hardware.

The notification of information is not limited to the aspects/embodiments described in the present disclosure, and may be performed using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Broadcast Information (Master Information Block (MIB), System Information Block (SIB)), other signals, or combinations thereof. The RRC signaling may also be referred to as an RRC message, e.g., an RRC Connection Setup message, an RRC Connection Reconfiguration message, or the like.

Each of the above aspects/embodiments described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each of the above aspects/embodiments described in the present disclosure may be rearranged as long as there is no conflict. For example, the method described in the present disclosure presents the elements of the various steps using an exemplary sequence, and is not limited to the particular sequence presented.

The specific operation that is performed by the base station in the present disclosure may be performed by its upper node in some cases. In a network constituted by one or more network nodes having the base station, the various operations performed for communication with the terminal may be performed by at least one of the base station and other network nodes other than the base station (for example, MME, S-GW, or the like may be considered, but not limited thereto). Although, in the above, an example in which one other network node other than the base station is used has been described, a combination of a plurality of other network nodes (for example, MME and S-GW) may be used.

Information, and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information having been output can be deleted. The information having been input can be transmitted to another device.

The determination may be made by a value (0 or 1) represented by one bit or by Boolean value (Boolean: true or false), or by comparison of numerical values (for example, comparison with a predetermined value).

Each of the above aspects/embodiments described in the present disclosure may be used alone or in combination, or may be switched as it is executed. Further, notification of predetermined information (for example, notification of "being X") is not limited to being performed explicitly, but it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like described above may be represented by using any of a variety of different technologies. For example, data, instruction, command, information, signal, bit, symbol, chip, or the like that may be described throughout the above description, may be represented by voltage, current, electromagnetic wave, magnetic field or magnetic particle, optical field or photons, or a desired combination thereof.

Note that the terms described in this disclosure and the terms necessary for understanding the present disclosure may be replaced by terms having the same or similar meanings. For example, at least one of the channel and the symbol may be a signal (signaling). Also, the signal may be a message. Further, Component Carrier (CC) may be referred to as a carrier frequency, a cell, a frequency carrier, or the like.

The terms "system" and "network" used in the present disclosure can be used interchangeably.

Further, the information, the parameters, and the like described in the present disclosure can be represented by an absolute value, can be expressed as a relative value from a predetermined value, or can be represented by corresponding other information. For example, the radio resource can be indicated by an index.

The names used for the above-described parameters are not restrictive names in any respect. In addition, formulas and the like using these parameters may be different from those explicitly disclosed in the present disclosure. Because the various channels (for example, PUCCH, PDCCH, or the like) and information elements can be identified by any suitable names, the various names assigned to these various channels and information elements shall not be restricted in any way.

In the present disclosure, the terms "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the term such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or with some other suitable term.

At least one of the base station and the mobile station may be called a transmitting device, a receiving device, a communication device, or the like. Note that, at least one of the base station and the mobile station may be a device mounted on a moving body, a moving body itself, or the like. The mobile body may be a vehicle (for example, car, plane, etc.), an unmanned mobile body (for example, drone, self-driving car,), or a robot (manned or unmanned). At least one of the base station and the mobile station can be a device that does not necessarily move during the communication operation. For example, at least one of the base station and the mobile station may be an Internet of Things (IoT) device such as a sensor.

The base station in the present disclosure may be read as a mobile station (user terminal, the same applies hereinafter). For example, each aspect/embodiment of the present disclosure may be applied to a configuration in which communication between the base station and the mobile station is replaced by communication between a plurality of mobile stations (for example, it may be called device-to-device (D2D), vehicle-to-everything (V2X), etc.). In this case, the mobile station may have the function of the base station. Further, words such as "up" and "down" may be replaced with words corresponding to communication between terminals (for example, "side"). For example, up channels, down channels, etc. may be replaced with side channels (or side links).

Similarly, the mobile station in the present disclosure may be read as a base station. In this case, the base station may have the function of the mobile station. A radio frame may be composed of one or more frames in the time domain. Each of one or more frames in the time domain may be referred to as a subframe. The subframe may be further configured by one or more slots in the time domain. The subframes may be a fixed time length (for example, 1 ms) independent of numerology.

Numerology may be a communication parameter applied to at least one of transmission and reception of a certain signal or channel. The numerology may represent one among, for example, subcarrier spacing (SubCarrier Spacing: SCS), bandwidth, symbol length, cyclic prefix length, transmission time interval (Transmission Time Interval: TTI), number of symbols per TTI, radio frame configuration, specific filtering process performed by a transceiver in the frequency domain, specific windowing process performed by a transceiver in the time domain, and the like.

A slot may be configured with one or a plurality of symbols (Orthogonal Frequency Division Multiplexing (OFDM) symbols, Single Carrier Frequency Division Multiple Access (SC-FDMA) symbols, etc.) in the time domain. The slot may be a unit of time based on the numerology.

The slot may include a plurality of minislots. Each minislot may be configured with one or more symbols in the time domain. The minislot may also be called a subslot. The minislot may be composed of symbols fewer than symbols in one slot. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, TTI refers to a minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

TTI may be a transmission time unit such as a channel-encoded data packet (transport block), a code block, or a code word, or may be a processing unit such as scheduling or link adaptation. Note that when TTI is given, a time interval (for example, the number of symbols) in which a transport block, a code block, a code word, or the like are actually mapped may be shorter than TTI.

When one slot or one minislot is called TTI, one or more TTIs (that is, one or more slots or one or more minislots) may be a minimum time unit of scheduling. The number of slots (number of minislots) constituting the minimum time unit of scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, or the like. TTI shorter than the ordinary TTI may be referred to as a shortened TTI, a short TTI, a partial TTI (partial or fractional TTI), a shortened subframe, a short subframe, a minislot, a subslot, a slot, or the like.

Note that a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time domain and the frequency domain, and may include one or a plurality of continuous subcarriers in the frequency domain. The number of subcarriers included in the RB may be the same regardless of the numerology, for example, twelve. The number of subcarriers included in the RB may be determined based on the numerology.

Also, the time domain of the RB may include one or a plurality of symbols, and may have a length of 1 slot, 1 minislot, 1 subframe, or 1 TTI. The 1 TTI, the 1 subframe, or the like may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, or the like.

The resource block may be configured by one or more resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. The PRB may be defined in BWP and numbered within that BWP.

The BWP may include UL BWP (UL BWP) and DL BWP (DL BWP). One or more BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, a subframe, a slot, a minislot, and a symbol are merely examples. For example, the number of subframes included in the radio frame, the number of slots per the subframe or the radio frame, the number of minislots included in the slot, the number of symbols and RBs included in the slot or the minislot, the number of subcarriers included in the RB, the number of symbols included in the TTI, a symbol length, a cyclic prefix (CP) length, and the like, can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, and printed electrical connections, and as some non-limiting and non-exhaustive examples, by using electromagnetic energy having wavelengths in a radio frequency region, a microwave region, and a light (both of visible and invisible) region, and the like.

A reference signal may be abbreviated as Reference Signal (RS), and may be called pilot (Pilot) according to applicable standards.

The phrase "based on" used in the present disclosure, does not mean "based only on" unless explicitly stated otherwise. In other words, the phrase "based on" means both "based only on" and "based at least on".

A "means" in a configuration of each device may be replaced with "unit", "circuit", "device", or the like.

Any reference to elements using designations such as "first" and "second" used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive OR.

In the present disclosure, for example, if articles such as a, an, and the in English are added during translation, these articles shall include a plurality of nouns following these articles.

The terms "determining" and "deciding" used in this disclosure may encompass a wide variety of actions. The terms "determining" and "deciding" includes deeming that determining and deciding have been performed by, for example, judging, calculating, computing, processing, deriving, investigating, searching (looking up, search, inquiry) (e.g., searching in a table, database, or other data structure), ascertaining, and the like. Also, the terms "determining" and "deciding" includes deeming that determining and deciding have been performed by, for example, receiving (e.g., receiving information), transmitting (e.g., transmitting information), inputting (input), outputting (output), and accessing (e.g., accessing data in a memory), and the like. Further, the terms "determining" and "deciding" include deeming that determining and deciding have been performed by, for example, resolving, selecting, choosing, establishing, comparing, and the like. In other words, the terms "determining" and "deciding" include deeming that "determining" and "deciding" regarding some actions has been performed. Furthermore, the term "determining (deciding)" may be read as "assuming," "expecting," "considering," and the like.

In the present disclosure, the phrase "A and B are different" may mean "A and B are different from each other". Note that the phrase may mean "A and B are each different from C". Terms such as "leave," "coupled," and the like may also be interpreted in the same manner as "different."

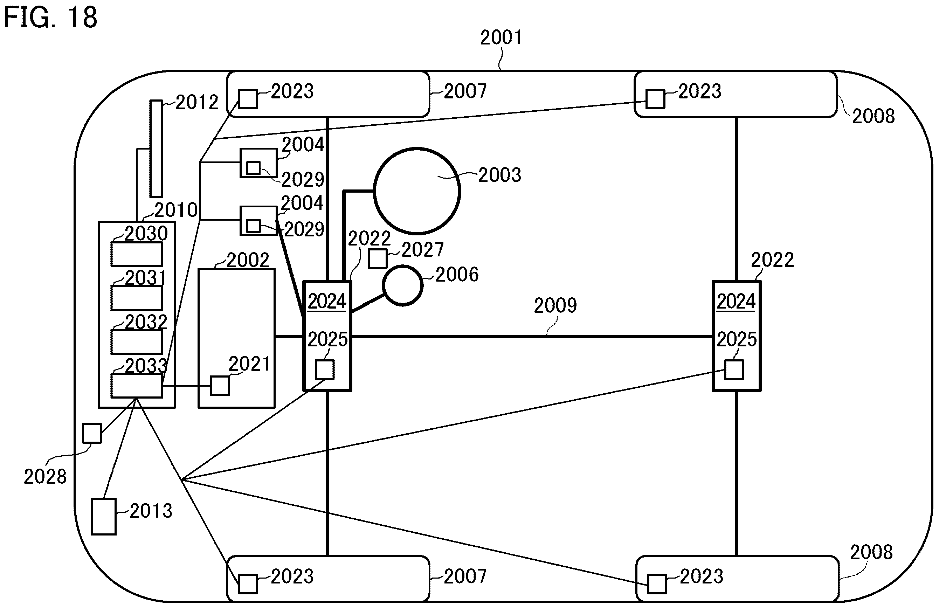

FIG. 18 illustrates a configuration example of a vehicle 2001. As illustrated in FIG. 18, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (also referred to as a handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. The electronic control unit 2010 receives signals from various sensors 2021 to 2027 provided in the vehicle. The electronic control unit 2010 may be called an ECU (electronic control unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS), map information (for example, high-definition (HD) maps, autonomous vehicle (AV) maps, or the like), a gyroscopic system (for example, Inertial Measurement Unit (IMU), Inertial Navigation System (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028 all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information with the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like all of which are provided in the vehicle 2001.

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 20: NG-RAN
- 100: gNB
- 110: DU
- 111: radio communication unit
- 113: DU control unit
- 115: IF connection unit
- 120: CU
- 121: CU control unit
- 123: IF connection unit
- 200: UE
- 210: radio communication unit
- 220: MAC processing unit
- 230: RRC processing unit
- 240: control unit
- 1001: processor
- 1002: memory
- 1003: storage
- 1004: communication device
- 1005: input device
- 1006: output device
- 1007: bus
- 2001: vehicle
- 2002: drive unit
- 2003: steering unit
- 2004: accelerator pedal
- 2005: brake pedal
- 2006: shift lever
- 2007: left and right front wheels
- 2008: left and right rear wheels
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A radio base station comprising:
a first device including a radio communication unit with a terminal; and
a second device connected to the first device,
wherein
the first device is directly connected to a first device of another radio base station using a specific interface, and
the first device includes:
a control unit that controls radio communication with the terminal; and
a transmission and reception unit that transmits or receives information on the radio communication via the specific interface.

2. The radio base station according to claim 1, wherein the transmission and reception unit transmits or receives information indicating a status of a radio link with the terminal in a secondary cell.

3. The radio base station according to claim 1, wherein the transmission and reception unit transmits or receives at least any of information on a downlink control channel, a Medium Access Control Layer Control Element, and a Radio Link Control Layer with the terminal in a secondary cell.

4. The radio base station according to claim 1, wherein the transmission and reception unit transmits or receives scheduling information to be used to decide a scheduling priority of the terminal.

5. A radio communication system comprising a terminal and a radio base station,
wherein
the radio base station includes:
a first device including a radio communication unit with the terminal; and
a second device connected to the first device,
the first device is directly connected to a first device of another radio base station using a specific interface, and
the first device includes:
a control unit that controls radio communication with the terminal; and
a transmission and reception unit that transmits or receives information on the radio communication via the specific interface.

6. A radio communication method by a radio base station, which includes a first device including a radio communication unit with a terminal, and a second device connected to the first device, wherein the first device is directly connected to a first device of another radio base station using a specific interface, comprising:
a step of controlling, by the first device, radio communication with the terminal; and
a step of transmitting or receiving, by the first device, information on the radio communication via the specific interface.
